# EUROPÄISCHE PATENTSCHRIFT

(11) **EP 0 983 720 B1**
(45) Veröffentlichungstag und Bekanntmachung des Hinweises auf die Patenterteilung: **31.07.2002**
(21) Anmeldenummer: 99200957.1
(22) Anmeldetag: 22.03.1999
(51) Int. Cl.: A01F 15/07

(54) **Vorrichtung zum Umwickeln einer Rundballe**
Device for wrapping a round bale
Dispositif pour emballer des balles rondes

(30) Priorität: 03.08.1998 CH 162798
(43) Veröffentlichungstag der Anmeldung: 08.03.2000
(73) Patentinhaber: NEW HOLLAND BELGIUM N.V., B-8210 Zedelgem (BE)
(72) Erfinder: Witzig, Walter, 8714 Feldbach (CH)
(74) Vertreter: Vandenbroucke, Alberic

(56) Entgegenhaltungen:
- EP-A- 0 424 192
- WO-A-90/14756
- WO-A-91/13540
- WO-A-96/12399
- GB-A- 2 221 203

## Beschreibung

Die Erfindung betrifft eine Vorrichtung zum Umwickeln einer Rundballe nach dem Oberbegriff des Patentanspruchs 1.

Rundballenpressen in Kombination mit einer Wickelvorrichtung sind bekannt, beispielsweise aus der deutschen Patentanmeldung DE-A-41 20 733. Bei der dort beschriebenen Maschine zum Verpacken eines Ballens mit Folie ist dessen Hauptrahmen starr mit der Ballenpresse verbunden und ist ein Ballentransportrahmen als fahrbarer Schlitten vorgesehen, um die Rundballe von der Ballenpresse zu einem Wickeltisch zu befördern. Der Wickeltisch selber besteht aus von einem Kettentrieb angetriebenen Tragrollen, die mit einem geringen Abstand zum Boden angeordnet sind. Die fertig umwickelte Rundballe muss offensichtlich manuell von der Wickelvorrichtung abgeladen werden. Bei anderen vorgeschlagenen Kombinationen mit einer Wickelvorrichtung lässt sich der Wickeltisch rückwärtig abkippen, so dass die fertigen Ballen auf dem Feld abgeworfen werden können.

Es hat sich aber herausgestellt, dass die bisherigen Lösungen nicht oder kaum für ausgeprägte Hanglagen, wie sie in den Alpenländern vorkommen, geeignet sind. Die Rundballen erfahren bei der Übergabe von der Ballenpresse zum Wikkeltisch eine zu geringe seitliche Führung, weshalb der normale Ablauf gestört wird und der Fahrer des Zugfahrzeuges anhalten und aussteigen muss, um die Rundballe von Hand an den richtigen Ort zu bringen. Dadurch wird die Zeitersparnis durch die Kombination einer Rundballenpresse und einer unmittelbar angehängten Wickelvorrichtung teilweise wieder zunichte gemacht.

Der vorliegenden Erfindung liegt nun die Aufgabe zugrunde, eine Kombination aus einer Ballenpresse mit einer Wickelvorrichtung vorzusehen, die auch in Hanglagen einen automatischen Betrieb gewährleisten.

Diese Aufgabe wird durch eine Vorrichtung mit den Merkmalen des Patentanspruchs 1 gelöst.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine Kombination einer Rundballenpresse mit einer Wickelvorrichtung
- Fig. 2: dieselbe Kombination beim Auswurf einer Rundballe aus der Ballenpresse,
- Fig. 3: die Übergabe der Rundballe von der Ballenpresse zur Wickelvorrichtung,
- Fig. 4: die Ablage der Rundballe auf die Wickelvorrichtung,
- Fig. 5: das Abkippen der fertig gewickelten Rundballe auf das Feld,
- Fig. 6: eine Seitenansicht auf die Auffanggabel mit Wickelvorrichtung,
- Fig. 7: eine Obenansicht auf die Auffanggabel, und
- Fig. 8: eine prinzipielle Anordnung des Folienspenders mit der Folienspannvorrichtung.

In den Figuren sind für dieselben Elemente jeweils dieselben Bezugszeichen verwendet worden und erstmalige Erklärungen betreffen alle Figuren, wenn nicht ausdrücklich anders erwähnt.

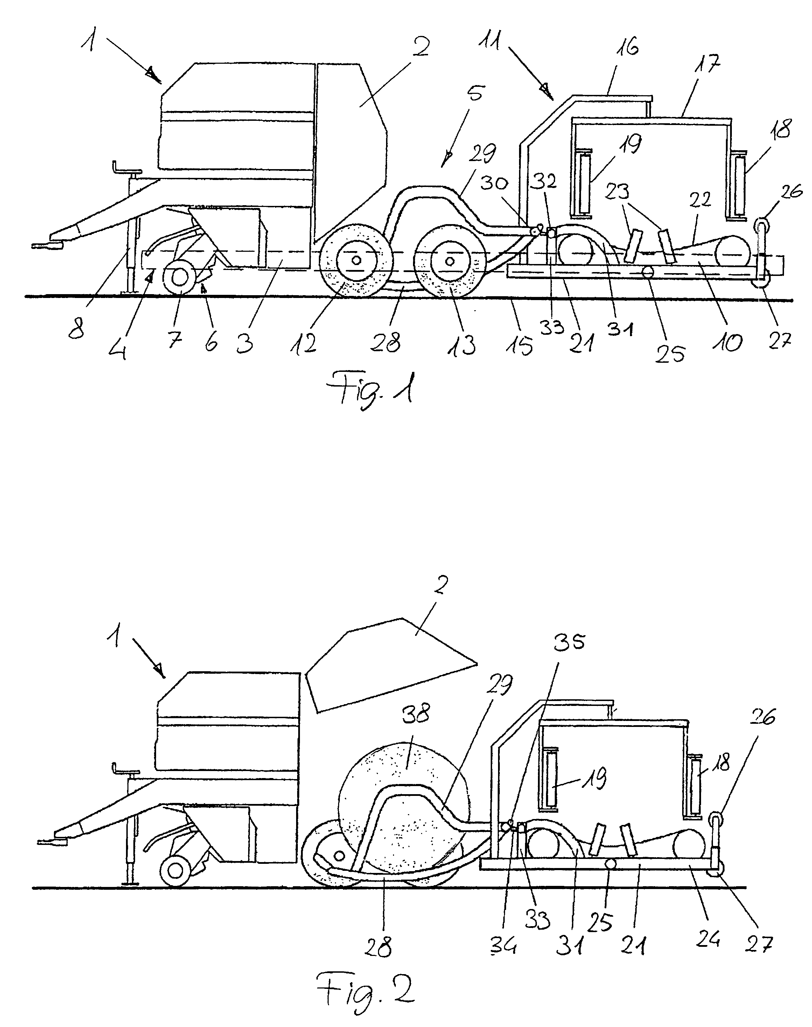

In der Figur 1 ist eine übliche Rundballenpresse 1 mit einer rückwärtigen Klappe 2 dargestellt, beispielsweise die Ballenpresse 644 der Firma New Holland, Pennsylvanien (U.S.A.). Es können jedoch auch andere Fabrikate als Rundballenpresse verwendet werden. Diese Rundballenpresse 1 ist auf dem vorderen Teil 3 eines hier gestrichelt dargestellten Tragrahmens 4 eines Wagens oder Fahrwerks 5 vorgesehen. Dazu ist das hinterste Räderpaar mit grösseren Rädern der Rundballenpresse 1 weggenommen. An der Vorderseite der Rundballenpresse 1 sind der Heu- odere Silageaufnehmer 6 (auch als Pick-up bezeichnet) mit zwei seitlichen Tasträdern 7 und eine spindelbetriebene Standstütze 8 ersichtlich. Auf dem hinteren Teil 10 trägt der Tragrahmen 4 eine Wickelvorrichtung 11. Der Wagen 5 weist zwei Räderpaare 12 und 13 auf, mit welchem die Ballenpresse 1 und die Wickelvorrichtung 11 über das Feld 15 gezogen werden können. Die Wickelvorrichtung 11 weist einen Auslegerarm 16 auf, an welchem ein U-förmige Träger 17 für zwei Folienspender 18 und 19 vorgesehen ist. Ferner weist sie einen Wickeltisch 21 auf, der aus von einem Kettentrieb 22 angetriebenen Rundstäben besteht. Der Kettentrieb 22 besteht dabei aus zwei Förderketten mit Hohlbolzen, zwischen denen die Rundstäbe befestigt sind. Auf beiden Seiten des Wickeltisches 21 sind zwei als Rollen ausgebildete Führungen 23 vorgesehen, die annähernd vertikal angeordnet sind. Das hintere Ende 24 des um eine Drehachse 25 abkippbaren Wickeltisches 21 ist mit einer höhenverstellbaren Auffangrolle 26 und einer sich darunter befindlichen Tastrolle 27 versehen. Die Drehachse 25 kann dabei von einer durchgehenden Welle oder auch von zwei seitlich angeordneten Drehpunkten gebildet werden. Zwischen der Rundballenpresse 1 und der Wickelvorrichtung 11 ist eine Auffanggabel 28 vorgesehen, die seitliche Führungsstangen 29 aufweist und an ihrem der Ballenpresse 1 abgewandten Seite um eine Drehachse 30 drehbar gelagert ist. Weitere Einzelheiten der Auffanggabel 28 sind in Figur 7 in Obenansicht dargestellt. Ferner sind auf dem Wickeltisch 21 zwei bewegliche Führungsarme 31 vorgesehen, von welchen nur der vorderste ersichtlich ist. Am einen Ende ist der kreisbogenförmigen Führungsarm 31 um ein Drehlager 32 drehbar angeordnet. Das Drehlager 32 ist dabei auf einer auf dem Wickeltisch 21 befestigten vertikalen Halterung 33 vorgesehen. Die beiden Führungsarme 31 weisen einen Anschlag 34 auf (vgl. Fig. 2). Auf den beiden gegenüberliegenden Seiten der Auffanggabel 28 sind je ein Nocken 35 angeordnet, der mit dem zugehörigen Anschlag 34 in Eingriff gelangen kann.

Wie in Figur 2 ersichtlich reichen die Führungsstangen 29 mindestens zur halben Höhe einer Balle 38 und sind zur Drehachse 32 der Auffanggabel 28 hin mit einer nach innen gebogenen Verengung 36 versehen (vgl. Fig. 7), um die Balle 38 zu zentrieren und leicht einzuklemmen. Das freie Ende der Auffanggabel 28 ist ferner mit einer griffähnlichen Führung 37 versehen, welche ein Zurückrollen der Balle 38 zur Rundballenpresse 1 verhindert.

Die Funktionsweise der oben beschriebenen Kombination der Ballenpresse 1 und der Wickelvorrichtung 11 ist nun folgendermassen:

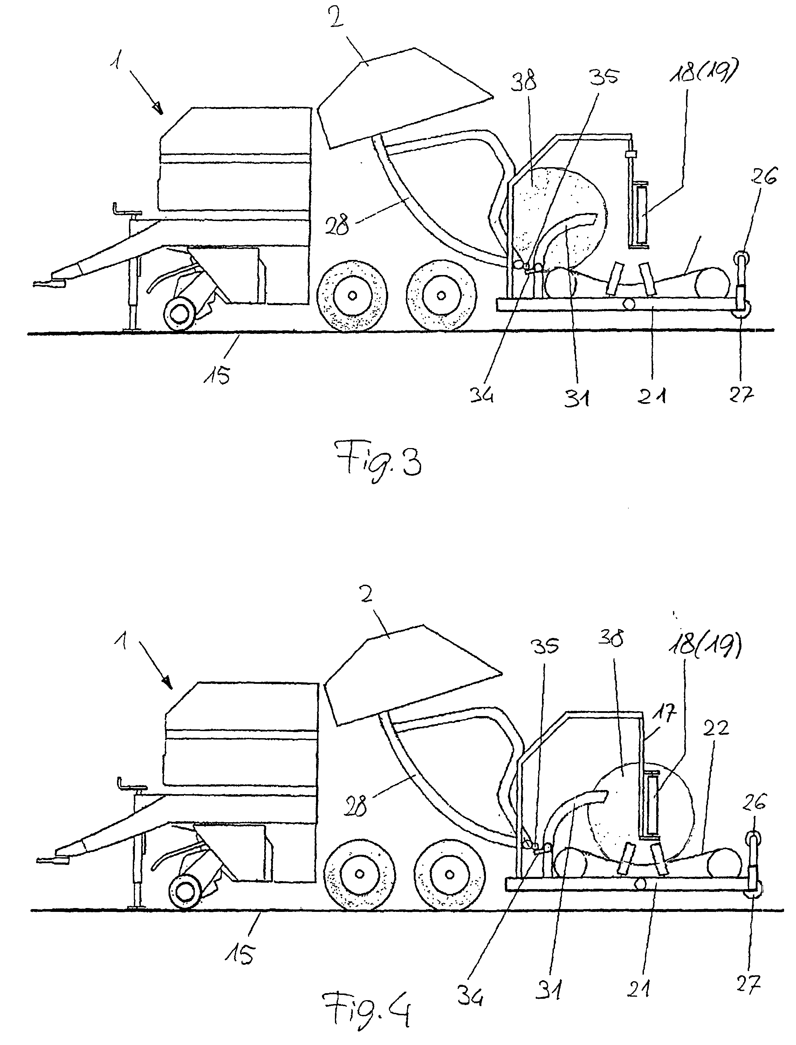

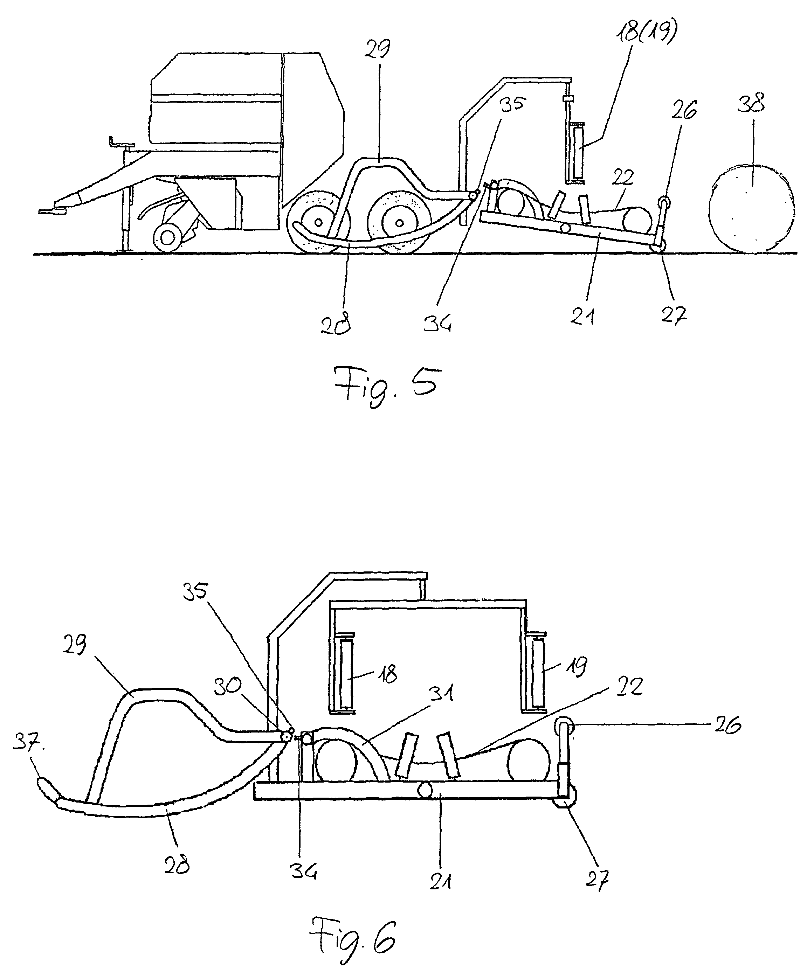

Nach dem Ballenpressen wird die rückwärtige Klappe 2 der Ballenpresse 1 geöffnet und eine mit einem Netz oder mit Schnur fertig erstellte Balle 38 auf die Auffanggabel 28 abgelegt (Figur 2). Durch die seitlichen Führungsstangen 29 wird verhindert, dass die Balle 38 von der Auffanggabel 28 wegrutschen kann, d.h dass die Balle 38 auch in steilerem Gelände stets auf der Auffanggabel 28 zentriert bleibt. Mittels einer hier nicht weiter dargestellten Hydraulik wird sodann die Auffanggabel 28 automatisch hochgeschwenkt (Figur 3), wobei die Nocken 35 auf die Anschlägen 34 der beiden Führungsarme 31 treffen, wodurch diese ebenfalls hochgeschwenkt werden. Damit ist eine stetige seitliche Führung der Balle 38 bis zum Wickeltisch 21 gewährleistet (Fig. 4). Die höhenverstellbare Auffangrolle 26 verhindert dabei, dass die Balle 38 in steilerem Gelände über den Wickeltisch 21 hinausrollt. Unmittelbar nachher wird die Auffanggabel 28 wieder zurückgeschwenkt, wodurch die Nocken 35 wieder ausser Eingriff der beiden Anschläge 34 gelangen und die kreisbogenförmigen Führungsarme 31 durch ihr Eigengewicht wieder in die Ausgangsstellung zurückgehen (vgl. Fig. 5). Daraufhin wird auch die Klappe 2 der Ballenpresse 1 wieder geschlossen, und kann somit eine neue Balle hergestellt werden. Der Übergabevorgang und das Zurückschwenken der Auffanggabel 28 und der Klappe 2 benötigt nur etwa 3 bis 4 Sekunden. Sobald die Balle 38 auf dem Wickeltisch 21 liegt, wird sie mit einer hier nicht weiter dargestellten Folie umwickelt (Figur 4), indem die beiden Folienspender 18 und 19 mit dem U-förmigen Träger 17 horizontal um die Balle 38 kreisen und gleichzeitig die Balle 38 mittels des Kettentriebs 22 um ihre eigene Achse gedreht wird. Die Rollen 23 auf dem Wickeltisch 21 gewährleisten dabei die seitliche Führung der Balle 38. Die Umwicklung der Balle 38 mit einer dünnen Plastikfolie wird von einer elektronischen Steuerung überwacht und bei ausreichender Umwicklung werden die Folien von zwei gezackten Schneidemessern getrennt. Bei Fertigerstellung der umwickelten Balle 38 wird ein entsprechendes Signal in der Führerkabine des Zugfahrzeuges ausgelöst. Die fertig umwickelte Baue 38 kann dann an einer geeigneten Stelle im Gelände abgeladen werden, indem der Wickeltisch 21 um die Drehachse 25 abgekippt wird, wobei die Tastrolle 27 sich auf den Boden 15 abstützt (Figur 5). Die Tastrolle 27 ist mit einer hier nicht weiter dargestellten Bodendruckregulierung versehen, die sich beim Abkippen den Bodenunebenheiten anpasst und verhindert, dass der Wickeltisch 21 nicht übermässig auf den Boden 15 drückt. Diese Bodenregulierung bewirkt im wesentlichen eine Druckreduktion der Hydraulik, nachdem der Wickeltisch 21 abgekippt ist. Konkret wird der hydraulische Druck von etwa 150 bar beim Abkippen auf etwa 50 bar beim Abstützen reduziert. Damit wird verhindert, dass der Wagen 5 durch einen zu hohen Druck auf den hinteren Teil 10 des Tragrahmens 4 abgehoben und der Boden 15 aufgerissen werden kann. Die Balle 38 rollt sodann von selber vom Wickeltisch 21 über die Auffangrolle 26 auf das Feld 15. Die höhenverstellbare Auffangrolle 26 sorgt dafür, dass die Balle 38 abgebremst wird und somit in unmittelbarer Nähe vom Wickeltisch 21 auf das Feld 15 abgelegt wird. Das Abkippen des Wickeltisches 21 und das Abrollen der Balle 38 benötigen nur etwa 1 bis 2 Sekunden. Anschliessend wird der Wickeltisch 21 automatisch wieder in die Ausgangsposition zurückgeschwenkt.

Mit der oben beschriebenen Kombination der Ballenpresse 1 und der Wickelvorrichtung 11 auf dem Wagen 5 können die Ballen 38 in einem durchgehenden Arbeitsgang gepresst und umwickelt werden, so dass es keine Stillstandszeiten mehr gibt, und eine besondere rationelle und schnelle Silage für angewelktes Grünfutter, Heu und dergleichen erreicht werden kann.

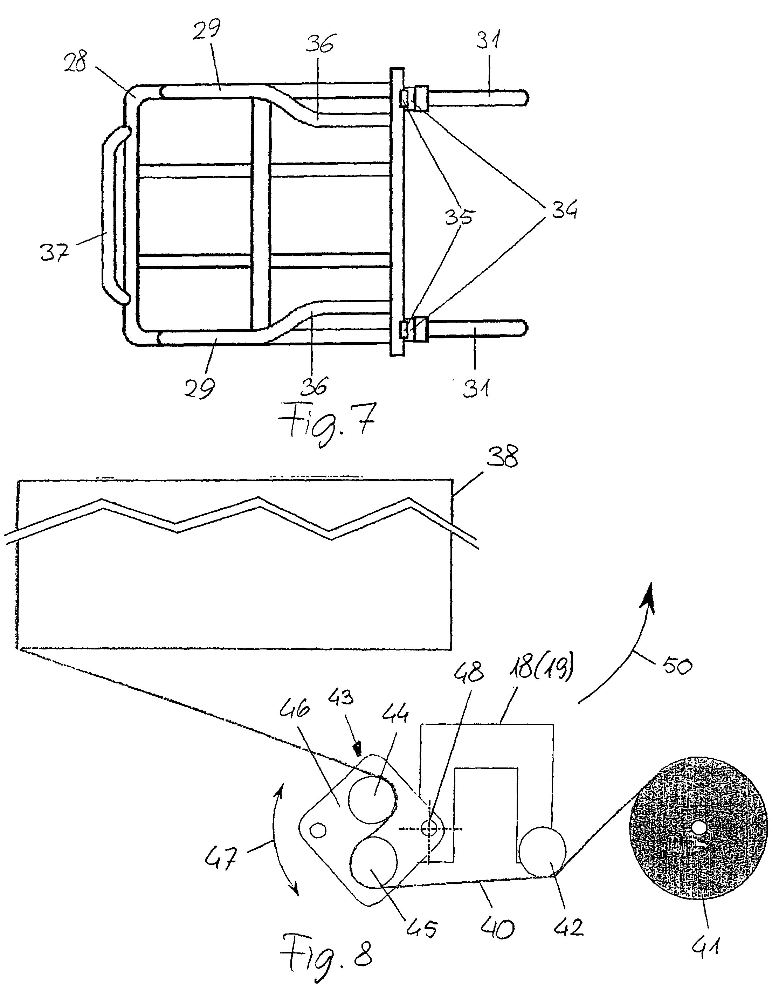

In Figur 8 ist eines der Folienspender 18 und 19 Obenansicht dargestellt. Die Folie 40 wird dabei von einer Folienrolle 41 über eine Umlenkrolle 42 zum einer Spanneinrichtung 43 geführt, die aus zwei parallelen Walzen 44 und 45 auf einem gemeinsamen Träger 46 besteht. Die beiden Walzen 44 und 45 sind mittels zwei ineinandergreifender Zahnräder in einem Drehverhältnis von 1:2 gekoppelt. Die Walze 45 dreht dadurch zwei mal langsamer als die Walze 44, so dass die Folie 40 stets gespannt ist. Ferner weisen die Walzen 44 und 45 über ihre gesamte Länge horizontale Rillen auf, um die Folie 40 über ihre gesamte Breite besser erfassen zu können. Der Träger 46 kann um eine Drehachse 48 gedreht und darauf mittels einer hier nicht dargestellten Schraube fixiert werden. Durch Drehen des Trägers 46 in einem Winkelbereich 47 von etwa 8° kann die Folie 40 um +/-15% vorgestreckt werden, d.h. die Folie 40 kann abhängig von den Temperaturverhältnissen mit in etwa gleichbleibender Spannung um die Balle 38 gewickelt werden. Wird der Träger 46 in Gegenuhrzeigersinn gedreht, ist die Umschlingung der Folie 40 um die Walzen 44 und 45 geringer, d.h. die Folie 40 wird weniger vorgestreckt. Wenn der Träger 46 andererseits in Uhrzeigersinn gedreht wird, ist die Umschlingung grösser, d.h. die Folie 40 stärker vorgestreckt. Mit einem Strichmass kann die jeweilige Einstellung festgehalten werden. Wie mit dem Pfeil 50 angegeben, werden die Folienspender 18 und 19 hier in Gegenuhrzeigersinn um die Balle 38 gedreht.

Mit einer hier nicht weiter gezeigten elektronischen Steuerung wird die Anzahl der Umwicklungen automatisch geregelt. Die Bedienung kann jedoch auch rein manuell erfolgen.

## Patentansprüche

1. Vorrichtung (11) zum Umwickeln einer Rundballe aus Heu, Stroh oder dergleichen, die in Kombination mit einer Rundballenpresse (1) in deren unmittelbaren Nähe auf demselben Fahrwerk (5) angeordnet ist, und eine Auffangeinrichtung zwischen der Rundballenpresse (1) und der Wickelvorrichtung (11) vorgesehen ist, **dadurch gekennzeichnet, dass** die Auffangeinrichtung eine um eine Achse drehbare Auffanggabel (28) mit seitlichen Führungen (29) aufweist, und auf der Wickelvorrichtung ebenfalls seitliche Führungen (23) zur Zentrierung der Rundballe (38) vorgesehen sind.

2. Vorrichtung nach Anspruch 1, **dadurch gekennzeichnet, dass** die Auffanggabel (28) die Rundballe (38) zumindest um ein Viertel ihres Umfanges umfasst.

3. Vorrichtung nach Anspruch 1 oder 2, **dadurch gekennzeichnet, dass** die seitlichen Führungen (29) mindestens zur halben Höhe der Rundballe (38) reichen und zur Drehachse (30) der Auffanggabel (29) hin eine Verengung (36) bilden.

4. Vorrichtung nach einem der Ansprüche 1 bis 3, **dadurch gekennzeichnet, dass** die Wickelvorrichtung (11) neben der seitlichen Führungen (23) bewegliche Führungsarme (31) aufweist, welche bei der Übergabe der Rundballe (38) durch die Auffanggabel (28) aufstellbar sind, um eine weitere seitliche Führung der Rundballe zu bilden.

5. Vorrichtung nach Anspruch 4, **dadurch gekennzeichnet, dass** die Führungsarme (31) kreisbogenförmig ausgebildet und an einem Ende drehbar auf einer zum Wickeltisch befestigten Stütze (33) angeordnet sind.

6. Vorrichtung nach Anspruch 5, **dadurch gekennzeichnet, dass** die Auffanggabel (28) im Bereich der Drehachse (30) Nocken (35) aufweisen, die mit im Bereich des Drehlagers (32) der Führungsarme (31) angeordneten Anschlägen (34) in Eingriff bringbar sind.

7. Vorrichtung nach einem der Ansprüche 1 bis 6, **dadurch gekennzeichnet, dass** der Wickeltisch (21) hydraulisch abkippbar ausgebildet ist.

8. Vorrichtung nach Anspruch 7, **dadurch gekennzeichnet, dass** der Wickeltisch (21) auf dem der Rundballenpresse (1) abgewandten Seite eine höhenverstellbare Auffangrolle (27) aufweist.

9. Vorrichtung nach Anspruch 8, **dadurch gekennzeichnet, dass** im Bereich der Auffangrolle (27) eine Tastrolle (26) unterhalb des Wickeltisches (21) vorgesehen ist, die mittels einer Bodendruckregulierung beim Abkippen des Wickeltisches an die Bodenunebenheiten anpassbar ist.

10. Vorrichtung nach einem der Ansprüche 1 bis 9, **dadurch gekennzeichnet, dass** die Wickelvorrichtung (11) einen Folienspender (18; 19) mit zwei parallel zueinander angeordneten Walzen (44, 45) aufweist, die zur Folienvorstreckung auf einem Träger (46) um eine Drehachse (48) drehbar und in einer bestimmten Position fixierbar sind.

11. Vorrichtung nach Anspruch 10, **dadurch gekennzeichnet, dass** der Träger (46) in einem vorbestimmten Winkelbereich (47) von vorzugsweise 8° drehverstellbar ist.

## Claims

1. A device (11) for wrapping a large round bale consisting of hay, straw or a like product, which device is used in combination with a round baler (1) and disposed in the immediate vicinity of the latter on the same rolling mechanism (5), with a receiver device between the round baler (1) and the wrapper (11), **characterised in that** the receiver device has a receiving fork (28) adapted to pivot about a shaft and having lateral guides (29) and **in that** the wrapper has lateral guides (23) for centring the round bale (38).

2. A device according to claim 1, **characterised in that** the receiving fork (28) holds the round bale (38) over at least one quarter of its periphery.

3. A device according to claim 1 or claim 2, **characterised in that** the lateral guides (29) extend at least halfway up the height of the round bale (38) and form a constriction (36) in the direction of the pivot (30) of the receiving fork (29).

4. A device according to any of claims 1 to 3, **characterised in that** the wrapper (11) includes, in addition to the lateral guides (23), mobile guide arms (31) which are adjustable during transfer of the round bale (38) by the receiving fork (28), to provide supplementary lateral guidance of the round bale.

5. A device according to claim 4, **characterised in that** the guide arms (31) are circular arc-shaped and are pivoted at one end on a fixture (33) fixed to the wrapping table.

6. A device according to claim 5, **characterised in that** the receiving fork (28) has cams (35) disposed in the vicinity of the pivot (30) which can mesh with stops (34) disposed in the vicinity of the pivot bearing (32) of the guide arms (31).

7. A device according to any of claims 1 to 6, **characterised in that** the wrapping table (21) is adapted to be tipped hydraulically.

8. A device according to claim 7, **characterised in that** the wrapping table (21) has an adjustable height receiving roller (27) on the side remote from the round baler (1).

9. A device according to claim 8, **characterised in that** a feeler roller (27) is provided under the wrapping table (21) and in the area of the receiving roller (26) so that a ground pressure controller can adapt to any unevenness of the ground during tipping of the wrapping table.

10. A device according to any of claims 1 to 9, **characterised in that** the wrapper (11) includes a sheet dispenser (18, 19) equipped with two parallel cylinders (44, 45) on a support (46) which can be rotated on a pivot (48) to prestretch the sheets and can be fixed in a particular position.

11. A device according to claim 10, **characterised in that** the support (46) is pivotable within a predefined sector (47), preferably a sector of 8°.

## Revendications

1. Dispositif (11) pour l'enroulement d'une grosse balle cylindrique constituée de foin, de paille ou d'un produit analogue qui est disposée en combinaison avec une ramasseuse-presse à grosses balles cylindriques (1) au voisinage immédiat de cette dernière sur le même mécanisme de roulement (5), avec prévision d'un dispositif de réception entre la ramasseuse-presse à grosses balles cylindriques (1) et le dispositif d'enroulement (11), **caractérisé en ce que** le dispositif de réception présente une fourche de réception (28) avec des guidages latéraux (29), pivotable autour d'un axe, et des guidages également latéraux (23) pour le centrage de la balle cylindrique (38), également prévus sur le dispositif d'enroulement.

2. Dispositif selon la revendication 1, **caractérisé en ce que** la fourche de réception (28) saisit la balle cylindrique (38) sur au moins un quart de sa périphérie.

3. Dispositif selon la revendication 1 ou 2, **caractérisé en ce que** les guidages latéraux (29) arrivent au moins jusqu'à mi-hauteur de la balle cylindrique (38) et forment un rétrécissement (36) en direction du pivot (30) de la fourche de réception (29).

4. Dispositif selon une des revendications 1 à 3, **caractérisé en ce que** le dispositif d'enroulement (11) présente, outre les guidages latéraux (23), des bras de guidage mobiles (31) qui sont réglables lors du transfert de la balle cylindrique (38) par la fourche de réception (28), de manière à constituer un guidage latéral supplémentaire de la balle cylindrique.

5. Dispositif selon la revendication 4, **caractérisé en ce que** les bras de guidage (31) sont en arc de cercle et sont disposés à une extrémité de manière à pouvoir pivoter sur une fixation (33) fixés sur la table d'enroulement.

6. Dispositif selon la revendication 5, **caractérisé en ce que** la fourche de réception (28) présente, au voisinage du pivot (30), des cames (35) qui sont engrenables avec des butées (34) disposées au voisinage du coussinet de pivotement (32) des bras de guidage (31).

7. Dispositif selon une des revendications 1 à 6, **caractérisé en ce que** la table d'enroulement (21) est agencée de manière à basculer hydrauliquement.

8. Dispositif selon la revendication 7, **caractérisé en ce que** la table d'enroulement (21) présente, sur la face éloignée de la ramasseuse-presse à grosses balles cylindriques (1), un rouleau de réception (26) à hauteur réglable.

9. Dispositif selon la revendication 8, **caractérisé en ce que** dans le domaine du rouleau de réception (26), un rouleau palpeur (27) est prévu au-dessous de la table d'enroulement (21), lequel, au moyen d'une régulation de la pression du sol, est adaptable aux inégalités du terrain lors du basculement de la table d'enroulement.

10. Dispositif selon une des revendications 1 à 9, **caractérisé en ce que** le dispositif d'enroulement (11) présente un distributeur de feuilles (18, 19) doté de deux cylindres disposés parallèlement l'un à l'autre (44, 45) lesquels peuvent être pivotés autour d'un pivot (48) pour le préétirage des feuilles sur un support (46) et peuvent être fixés dans une position déterminée.

11. Dispositif selon la revendication 10, **caractérisé en ce que** le support (46) est pivotable dans un secteur prédéfini (47) qui est de 8° préférentiellement.
